# EUROPÄISCHE PATENTSCHRIFT

(11) **EP 3 217 784 B1**
(45) Veröffentlichungstag und Bekanntmachung des Hinweises auf die Patenterteilung: **10.06.2020**
(21) Anmeldenummer: 14812123.9
(22) Anmeldetag: 10.11.2014
(51) Int. Cl.: A01G 25/16

(54) **WASSERVERTEILSTATION**
WATER DISTRIBUTION SYSTEM
DISPOSITIF DE DISTRIBUTION D'EAU

(43) Veröffentlichungstag der Anmeldung: 20.09.2017
(73) Patentinhaber: Deutsche Telekom AG, 53113 Bonn (DE)
(72) Erfinder: HEINZ, Sebastian, 53227 Bonn (DE); WINDHEUSER, Jörg, 40627 Düsseldorf (DE); SCHMIDT-GABRIEL, Michael, 82234 Wessling (DE); SCHOLL, Johannes, 80686 München (DE)
(74) Vertreter: Cohausz Hannig Borkowski Wißgott
(86) Internationale Anmeldenummer: PCT/EP2014/002997
(87) Internationale Veröffentlichungsnummer: WO 2016/074688

(56) Entgegenhaltungen:
- US-A- 5 908 157
- US-A1- 2014 109 990
- US-B1- 6 948 663

## Beschreibung

Die Erfindung betrifft eine Wasserverteilstation, insbesondere zur Garten- und Beet-Bewässerung, mit einem Wassereingang und wenigstens einem Schlauchanschluß, bevorzugt wenigstens zwei Schlauchanschlüssen, wobei an einen jeweiligen Schlauchanschluß ein Schlauch anschließbar ist zur Leitung von Wasser aus der Wasserverteilstation zu wenigstens einer Wasserbedarfsstelle, wobei die Wasserverteilstation modular aus einer Mehrzahl von, insbesondere identischen Wasserverteilmodulen zusammensetzbar ist, wobei ein jeweiliges Wasserverteilmodul zumindest einen Wassereingang und einen mit einem steuerbaren, bevorzugt elektrisch / elektronisch steuerbaren Ventil versehenen Schlauchanschluß zur Verbindung mit einem Schlauch aufweist, wobei an jedes Wasserverteilmodul ein Versorgungsbehälter anschließbar ist zur Aufnahme von Nährstoffen, insbesondere flüssigen Nährstoffen, die aus dem Versorgungsbehälter zum Schlauchanschluß des jeweiligen Wasserverteilmoduls dosierbar sind.

Solche Wasserverteilstationen sind im Stand der Technik bekannt, z.B. von der Fa. Gardena mit der Bezeichnung "Wasserverteiler automatic". Eine Solche Wasserverteilstation dient dazu einen Wasserzulauf aufzuspalten in ggfs. mehrere Wasserabgänge, die als Schlauchanschluß ausgelegt sind, um mehrere Wasserbedarfsstellen mit Wasser zu vorsorgen. Das kann durch einen parallelen Betrieb der ggfs. mehreren Schlauchanschlüsse erfolgen oder bei einem nicht ausreichenden Wasserdruck auch durch einen sequentiellen Betrieb der ggfs. mehreren Schlauchanschlüsse nacheinander, wie es bei dem genannten Gerät der Fall ist.

Das vorgenannte Gerät ist beispielsweise dazu ausgelegt, mit einem Bewässerungscomputer betrieben zu werden, der ein separates Gerät darstellt und mit dem Bewässerungszeiten für jeden betriebenen Schlauchanschluß programmiert werden können, wobei beide Geräte jedoch nicht miteinander kommunizieren und daher auch eine Zuordnung der Programmierung zu den einzelnen Schlauchanschlüssen verloren gehen kann. Weiterhin ist die Anzahl maximal betreibbarer Schlauchanschlüsse auf 6 begrenzt und - sofern ein Nutzer weniger als 6 Anschlüsse betreiben möchte - besteht die Notwendigkeit die nicht genutzten Anschlüsse zu verschließen. In einem solchen Fall muss ein Nutzer eine Infrastruktur kaufen, die er nicht gänzlichst nutzt, was einen Kostennachteil mit sich bringt.

Desweiterem ist der bekannte Wasserverteiler nur in der Lage, verschiedene Wasserbedarfsstellen mit Wasser zu versorgen. Eine genügende Nährstoffversorgung an einer jeweiligen Wasserbedarfsstelle muss hingegen weiterhin durch den Nutzer selbst erfolgen. Dabei ist es ebenso als Nachteil anzusehen, dass der Nutzer im Regelfall keine genügende Kenntnis über den tatsächlichen Nährstoffbedarf hat und auch weiterhin, dass verschiedene Pflanzenarten einen unterschiedlichen Bedarf an Nährstoffen, insbesondere an unterschiedlichen Nährstoffen haben, was der Nutzer jeweils berücksichtigen müsste.

Eine Wasserverteilstation der gattungsgemäßen Art ist auch bekannt aus der Publikation US 5 908 157 A.

Es ist daher eine Aufgabe der Erfindung eine Wasserverteilstation der gattungsgemäßen Art derart auszubilden, dass die Anzahl der mit Schlauchanschlüssen realisierbaren Wasserabgänge grundsätzlich nicht begrenzt ist und dass ein Nutzer die Anzahl der Wasserabgänge selbst beliebig wählen kann. Desweiten soll gewährleistet sein, dass an jedem als Wasserabgang ausgebildeten Schlauchanschluß ein unterschiedlicher Bedarf an Nährstoffen berücksichtigt werden kann, wenn sich dafür eine Notwendigkeit ergibt.

Eine weitere Aufgabe ist es auch, einem Nutzer eine Rückmeldung über den Zustand der Wasserbedarfsstellen zu geben und weiter bevorzugt auch unter Berücksichtigung von Umweltaspekten und zur Eindämmung von Wasserverschwendung im Idealfall den Wasserverbrauch auf das Nötigste zu beschränken, insbesondere jeweils individuell abgestimmt auf eine jeweilige Wasserbedarfsstelle.

Diese Aufgabe wird erfindungsgemäß gelöst, durch eine Wasserverteilstation gemäß unabhängigen Anspruch 1.

Ein erster wesentlicher Kerngedanke der Erfindung liegt in der Modularität, die es erschließt genau nur soviele Schlauchanschlüsse an einer erfindungsgemäßen Wasserverteilstation zu realisieren, die ein Nutzer wirklich benötigt. Ein Blindflanschen nicht benötigter Schlauchanschlüsse wie im Stand der Technik entfällt damit und somit entfallen auch die Kosten für nicht benötigte, jedoch eingekaufte Anschlüsse.

Erfindungsgemäß stellt jedes Wasserverteilmodul wenigstens einen Schlauchanschluß zur Verfügung, so dass mit einem solchen Schlauchanschluß der Wasserbedarf an einer Wasserbedarfsstelle gedeckt werden kann, z.B. einem bestimmten Beet im Garten. Mit der Anzahl der zu versorgenden Wasserbedarfsstellen steigt somit lediglich die Anzahl der zu verwendenden Wasserverteilmodule, die zu der gesamten Wasserverteilstation zusammengefügt werden. Diese Anzahl kann der Nutzer individuell wählen. Die Wasserversorgung der einzelnen Wasserverteilmodule erfolgt gemeinsam jeweils über deren Wassereingang. Mit diesen können die Wasserverteilmodule an einer zentralen Andockstation oder auch untereinander verbunden werden. Die Versorgung mit Wasser kann so erfolgen, dass alle Wassereingänge gleichzeitig druckbeaufschlagt sind oder zeitlich nacheinander.

Bei einer gleichzeitigen Druckbeaufschlagung der Wassereingänge aller Wasserveteilmodule kann es bevorzugt vorgesehen sein, dass die Wasserverteilmodule jeweils individuell gesteuert sind (z.B. durch eigene Steuerelektronik oder von außen), den Wasserdurchfluß, also die z.B. Ventilgesteuerte Durchschaltung des Wassereinganges auf den Schlauchanschluß vorzunehmen, z.B. im einfachsten Fall zeitgesteuert oder gemäß später beschriebene Ausführungen meßwertgesteuert / -geregelt.

Einzelne Wasserverteilmodule sind zu diesem Zweck hintereinander oder nebeneinander reihbar. In bevorzugter Weiterbildung weist ein jedes Wasserverteilmodul auch einen Wasserausgang auf zur Verbindung mit dem Wassereingang eines weiteren Wasserverteilmoduls. Bevorzugt liegen dann Wassereingang und -ausgang fluchtend auf gegenüberliegenden Gehäuseseiten des Wasserverteilmoduls.

Es ist also erfindungsgemäß an den Wasserausgang eines Wasserverteilmoduls ein jeweils folgendes Wasserverteilmodul mit seinem Wassereingang anschließbar bzw. angeschlossen. Von allen zusammengeschlossenen Wasserverteilmodulen weist in diesem Fall somit nur eines, nämlich bevorzugt das im Zusammenschluß in Wasserfließrichtung erste Wasserverteilmodul einen freien nicht belegten Wassereingang auf, der sodann als zentraler Wassereingang dient für alle in Fließrichtung dahinter liegenden Wasserverteilmodule. Dafür sind bevorzugt alle Wassereingänge der mehreren Wasserverteilmodule miteinander fluidtechnisch verbunden.

Bei Verwendung einer Dockingstation reicht es, wenn diese einen zentralen Wassereingang aufweist und Anschlußstellen, an denen die Module mit ihren jeweiligen Wassereingängen anschließbar sind. Hier kann auch die Steuerung von einer in die Dockingstation integrierten Elektronik oder einer diese steuernden externen Steuerung vorgenommen werden.

Eine Steuerung des Wasserflusses durch den wenigstens einen jeweils pro Wasserverteilmodul vorhandenen Schlauchanschluß, z.B. durch Ansteuerung eines darin vorhandenen steuerbaren Ventils kann also sodann bevorzugt durch jedes Wasserverteilmodul individuell selbst erfolgen, z.B. eine darin befindliche Steuerelektronik oder auch durch eine übergeordnete für mehrere, bevorzugt alle Module gemeinsame Steuerung, die z.B. auch in einer baulichen Einheit realisiert sein kann, an der die einzelnen Wasserverteilmodule jeweils andockbar sind.

Die Verbindung von mehreren, insbesondere bauidentischen Wasserverteilmodulen erfolgt bevorzugt ohne zentrale Dockingstation und zumindest durch eine Steckverbindung bei Wassereingang und Wasserausgang von benachbarten Wasserverteilmodulen, d.h. z.B. durch Verkupplung entsprechender Stutzen von Wassereingang und Wasserausgang.

Bevorzugt erfolgt noch eine weitere mechanische Verkupplung der Module untereinander, z.B. um eine Rotation der Module gegeneinander zu vermeiden, sofern - wie häufig üblich - Stutzen von Wassereingang und -ausgang rotationssymmetrisch ausgeführt sind. Eine solche mechanische Verbindung kann z.B. über die gegenüberliegenden Seitenflächen benachbarter Wasserverteilmodule erfolgen, z.B. durch Steckelemente und Ausnehmungen in welche die Steckelemente eindringen können. So können aneinandergereihte und miteinander verbundene mehrere Wasserverteilmodule eine zusammenhängende feste Einheit ausbilden. Die Seitenflächen von Wasserverteilmodulen können somit eine Schnittstelle zur Verbindung von solchen Modulen bilden, mit zumindest fluidischen und bevorzugt auch mechanischen Koppelelementen.

Ein weiterer wesentlicher Kerngedanke der Erfindung liegt darin, dass an jedes Wasserverteilmodul ein Versorgungsbehälter anschließbar ist, der zur Aufnahme von Nährstoffen, insbesondere flüssigen Nährstoffen dient. Diese Nährstoffe können durch eine Dosiervorrichtung, z.B. ein Dosierventil im Versorgungsbehälter oder auch im Wasserverteilmodul in den Schlauchanschluß des jeweiligen Wasserverteilmoduls zu dosiert werden.

Die Steuerung der Dosierung kann hier ebenso wiederum durch eine in jedem Wasserverteilmoduls vorhandenen elektronische Steuerung erfolgen oder auch durch eine gemeinsame Steuerung aller Wasserverteilmodule, insbesondere die - wie schon zuvor genannt - in einer baulichen Einheit realisiert sein kann, an der die einzelnen Wasserverteilmodule jeweils andockbar sind.

Es besteht so erfindungsgemäß die Möglichkeit, jede Wasserbedarfsstelle, der ein Wasserverteilmodul zugeordnet ist, mit einer anderen Nährstoffzusammensetzung oder auch sonstigen Zusatzstoffen, z.B. auch Pflanzenschutzmitteln gemäß dem individuellen Bedarf zu versorgen. So kann z.B. ein Rosenbeet mit anderen Stoffen versorgt werden als ein Gemüsebeet, obwohl die Wasserzufuhr zu allen Wasserbedarfsstellen durch denselben Wassereingang, bevorzugt eines der Wasserverteilmodule erfolgt.

Zur Befestigung eines Versorgungsbehälters können ein jeweiliges Wasserverteilmodul, bevorzugt an/auf seiner oberen Gehäuseseite und ein Versorgungsbehälter, bevorzugt an seiner unteren Gehäuseseite jeweils zueinander passende Schnittstellen aufweisen, die zumindest eine fluidische, bevorzugt auch eine mechanische Verbindung zwischen Wasserverteilmodul und dem Versorgungsbehälter schaffen. Bevorzugt können Versorgungsbehälter und Wasserverteilmodul im horizontalen Querschnitt eine gleiche Querschnittsform und -größe aufweisen. Insbesondere bilden sie hierdurch im verbundenen Fall eine einheitliche Gehäuseerscheinung.

Dabei kann es vorgesehen sein, dass ein Nutzer die Nährstoffzusammensetzung bzw. allgemein den Inhalt selbst zusammenstellt und ein Versorgungsbehälter mit dieser Zusammensetzung durch den Nutzer selbst füllbar und auch nachfüllbar ist.

Eine andere Ausführung kann auch vorsehen, dass in Verbindung mit einem System / Kit eine erfindungsgemäße Wasserverteilstation eine Vielzahl von Versorgungsbehältern mit vorgemischten, insbesondere pflanzenspezifischen Nährstoffmixturen umfasst, insbesondere wobei ein jeder Versorgungsbehälter hinsichtlich seiner Nährstoffmixtur oder des Pflanzentypus, für welchen die Nährstoffmixtur vorgesehen ist, markiert ist.

Solche Vormischungen können z.B. in Verkaufsstätten, z.B. Gartenbaumärkten fertig konfiguriert angeboten werden. Dabei kann besonders vorgesehen sein, dass jeder Versorgungsbehälter der genannten Vielzahl mittels einer einheitlichen Schnittstelle an ein beliebiges Wasserverteilmodul anschließbar ist. Dies gilt auch für Versorgungsbehälter sonstiger Art, insbesondere leere Versorgungsbehälter, die durch den Nutzer befüllt werden können oder im Betrieb einer Wasserverteilstation leer bleiben, z.B. wenn keinerlei Nährstoffe zudosiert werden sollen.

Sofern keine Versorgung mit Nährstoffen oder sonstigen Mitteln nötig ist, kann es auch vorgesehen sein, dass die Versorgungsbehälterschnittstelle an einem Wasserverteilmodul schließbar ist ohne eine Versorgungsbehälter anschließen zu müssen.

Eine bevorzugte Weiterbildung aller möglichen Ausführungen kann vorsehen, dass die Wasserverteilstation wenigstens ein Kommunikationsmodul aufweist zur Funkkommunikation mit einem Kommunikationsgerät. Dabei kann es ein gemeinsames Kommunikationsmodul an der Wasserverteilstation, insbesondere in dessen Netzteil geben, das für alle Wasserverteilmodule vorgesehen ist oder es gibt jeweils ein Kommunikationsmodul pro Wasserverteilmodul, insbesondere das an einen Steckplatz eines Wasserverteilmoduls ansteckbar ist. Im ersten Fall können so Daten zu und von der genannten baulichen, insbesondere zentralen Einheit der Wasserverteilstation kommuniziert werden, insbesondere wobei diese Einheit die Daten für oder von jedem Wasserverteilmodul aufbereitet und die Steuerung vornimmt. Im zweiten Fall ist jedes individuelle Wasserverteilmodul selbst kommunikationsfähig und kann Daten austauschen, also z.B. Daten zur Steuerung empfangen oder auch Daten, beispielsweise gemessene Daten versenden, wie den Verbrauch an Nährstoffen, die durchflossene Wassermenge etc.

Ein Kommunikationsmodul kann bzw. in ein Weitbereichsnetzwerk eingebunden sein, z.B. nach einem Mobilfunkstandard, z.B. GSM, UMTS, LTE etc. arbeiten. Dafür kann eine SIM-Karte eines Netzbetreibers, z.B. der Anmelderin in ein Kommunikationsmodul eingesetzt werden. Ergänzend oder auch ausschließlich kann ein Kommunikationsmodul in ein Nahbereichsnetzwerk eingebunden sein oder eingebunden werden, z.B. gemäß WLAN-Standards, Bluetooth etc.

Das Kommunikationsgerät, das in Kommunikationsverbindung zu einer Einheit der Wasserverteilstation oder jedem Wasserverteilmodul steht kann ein mobiles Kommunikationsgerät eines Nutzers sein, aber auch ein stationärer Computer. So kann ein Nutzer z.B. auf die interne Steuerung der Wasserverteilstation zugreifen, insbesondere in die Steuerung eingreifen und diese programmieren und/oder Statusdaten abfragen und so in Erfahrung bringen, ob z.B. Nährstoffe nachgefüllt werden müssen.

Beispielsweise kann dies über eine Applikation erfolgen, die auf einem sogenannten Smartphone lauffähig ist.

Die Erfindung sieht vor, dass jedem Wasserverteilmodul wenigstens ein in Erdreich einsteckbares Sensorelement zugeordnet ist, mittels dem am Ort einer Wasserbedarfsstelle Bodenwerte, insbesondere die Feuchte und/oder der Nährstoffgehalt des Bodens messbar sind, wobei von dem wenigstens einen Sensorelement erfasste Meßwerte mittels einer Kommunikationsverbindung an ein Kommunikationsgerät und/oder ein Wasserverteilmodul oder an ein vorgenanntes Kommunikationsmodul eines Wasserverteilmoduls oder einer zentralen Einheit übermittelbar sind. Dabei ist die Wasserverteilstation oder das zugeordnete Wasserverteilmodul eingerichtet, eine Steuerung des zugeordneten Wasserverteilmoduls in Abhängigkeit der Meßwerte des Sensorelementes vorzunehmen.

Folgende beispielhaft und nicht abschließend aufgezählte und auch untereinander beliebig kombinierbare Aktionen können in diesen Zusammenhang ausgeführt werden:
- Eine Steuerung des insbesondere elektronisch / elektrisch steuerbaren Wasser-Ventils des Schlauchanschlusses eines jeden Wasserverteilmoduls in Abhängigkeit von die Bodenfeuchte repräsentierenden Messwerten des Sensorelementes
- Eine Steuerung des insbesondere elektronisch / elektrisch steuerbaren Ventils des Schlauchanschlusses eines jeden Wasserverteilmoduls in Abhängigkeit von aktuellen Wetterdaten oder Wettervorhersagedaten, insbesondere die durch Kommunikation aus einer Wetterstation und/oder Wetterdatenbank eingelesen sind
- Eine Steuerung eines Dosierventils im Wasserverteilmodul oder im Versorgungsbehälter in Abhängigkeit von den Nährstoffgehalt repräsentierenden Messwerten des Sensorelementes.

Z.B. eine Wassersparfunktion kann dadurch erzielt werden, dass zwar das Sensorelement ein geringe Bodenfeuchte misst, die Anlass zur Bewässerung geben würde, hingegen aus aktuellen Wetterdaten, insbesondere aus aktuellen prognostizierten Wetterdaten bekannt ist oder zumindest eine Grenzwahrscheinlichkeit dafür überschritten, dass es zu Regenfall kommt, insbesondere innerhalb eines vorgebbaren Zeitfensters. Durch Steuerung in Abhängigkeit lokaler Bodenfeuchtedaten und Wetterdaten kann sodann eine Bewässerung unterbleiben.

Die Steuerung kann auch vorsehen, dass bei einem messtechnisch festgestellten Nährstoffmangel dem Wasser Nährstoffe aus dem Versorgungsbehälter zudosiert werden, bzw. dies unterbleibt, wenn genügend Nährstoffe am Ort des Sensorelementes vorhanden sind.

Bei einem durch wenigstens ein Sensorelement festgestellten Nährstoffmangel kann die Erfindung auch vorsehen, dass die Wasserverteilstation bzw. das zugeordnete Wasserverteilmodul eingerichtet ist eine Bewässerung mit zudosierten Nährstoffen vorzunehmen, selbst wenn bei genügend hoher Bodenfeuchte eine Bewässerung aus Feuchtigkeitsgründen nicht notwendig wäre. So kann auch die jederzeit ausreichende Nährstoffversorgung sichergestellt werden.

Die Erfindung sieht im Regelfall vor, dass ein Sensorelement, das einem Wasserverteilmodul zugeordnet ist, zumindest in örtlicher Nähe des Auslaufes des am Wasserverteilmodul angeschlossenen Schlauches angeordnet ist, damit eine Bewässerung und/oder Nährstoffzufuhr durch dieses Sensorelement auch feststellbar ist, insbesondere zeitnah.

Eine Weiterbildung kann auch vorsehen, dass ein Sensorelement insbesondere mittels einer Schlauchverbindung an den an einem Wasserverteilmodul abgehenden Schlauch anschließbar ist, insbesondere hierüber Wasser zu einer Austrittsöffnung im Steckelement des Sensorelementes leitbar ist, mit dem es in den Boden einsteckbar ist. So wird das Wasser unmittelbar zum Einsteckort des Sensorelementes geleitet. Statt einer Schlauchverbindung zwischen Sensorelement und Schlauch kann das Sensorelement auch direkt insbesondere unter Erstellung einer Fluidverbindung auf den Schlauch aufgesteckt werden oder der Schlauch wird an das Sensorelement angeschlossen und das Sensorelement bildet selbst den Auslauf des Schlauches.

Ein Sensorelement kann autark mit Strom versorgt sein, z.B. durch Solarzelle und damit geladene Akkus, die im Sensorelement integriert sind. Ebenso besteht die Möglichkeit einer kabelgebundenen externen Stromversorgung, z.B. über die Wasserverteilstation bzw. ein einzelnes Wasserverteilmodul.

Auch die Kommunikation zwischen Sensorelement und seinem Wasserverteilmodul oder einer zentralen Einheit mit mehreren Wasserverteilmodulen kann kabelgebunden oder per Funk erfolgen, z.B. per WLAN, Bluetooth oder auch über ein Weitverkehrsnetz, insbesondere GSM, UMTS, LTE etc. wofür das Sensorelement eine Kommunikationseinheit aufweist.

Die Erfindung sieht vor, dass ein an einem Wasserverteilmodul anschließbarer Schlauch ein entlang der Schlaucherstreckung verlaufendes Kabel mit wenigstens einem Leiter aufweist, wobei das Kabel des Schlauches, bzw. dessen Leiter an das Wasserverteilmodul elektrisch kontaktierbar ist, z.B. mittels einer Steckverbindung, die neben einer wasserführenden Verbindung auch eine elektrische Verbindung zum Kabel herstellt. Jegliches dort oder auch am Ort eines Sensorelementes elektrisch aufgeprägte Signal kann so entlang der gesamten Schlaucherstreckung geführt werden und an jedem Ort des Schlauches abgegriffen werden.

Erfindungsgemäß ist es vorgesehen , dass mittels des Kabels eine Stromversorgung eines Sensorelementes eingerichtet oder zumindest einrichtbar ist und/oder dass eine kabelgebundene Kommunikationsstrecke zwischen Wasserverteilmodul und Sensorelement zur Übermittlung von Messwerten mittels des Kabels eingerichtet oder zumindest einrichtbar ist.

Elektrische Verbindungen zwischen Sensorelement und dem Kabel im/am Schlauch können z.B. durch Piercing-Kontakte erfolgen, aber auch induktiv. Auch kann es vorgesehen sein, am Schlauch Kontaktierungsstellen vorzusehen z.B. an dessen Ende oder über die Schlauchlänge hinweg in periodischem Abstand, an denen z.B. das Sensorelement an das Kabel angeschlossen werden kann. Diese Kontaktierungsstellen können wasserdicht ausgebildet sein.

In weiterer Bevorzugung kann die Wasserverteilstation oder jedes seiner Wasserverteilmodule oder eine übergeordnete Steuerung eingerichtet sein anhand von Messwerten eines jeweiligen Sensorelementes und / oder Wetterdaten textliche und/oder bildliche Informationen über aktuelle Bodenzustände am Ort eines Sensorelementes und/oder textliche und/oder bildliche Informationen über zukünftige, mittels eines Wasserversorgungsmoduls durchzuführende Versorgungsaktionen zu bilden und an ein Kommunikationsgerät, insbesondere zum Zweck der dortigen Visualisierung zu übermitteln.

Auf diese Weise kann sich ein Nutzer jederzeit über den aktuellen Zustand seiner Pflanzen informieren und z.B. an seinem Smartphone oder an einem Computer zurückliegende Bewässerungen, aktuelle Bodenwerte und auch zukünftig, insbesondere automatisch geplante Bewässerungen anzeigen lassen und ggfs. in die Planungen eingreifen.

Auch kann es vorgesehen sein, dass die Wasserverteilstation oder ein jeweiliges Wasserverteilmodul eingerichtet ist aus durch Kommunikation erhaltenen Wetterdaten, z.B. von einer Wetterstation oder auch einer Wetterdatenbank Warnhinweise an einen Nutzer auszugeben, z.B. Schlechtwetterwarnungen, um so ggfs. Schutzmaßnahmen rechtzeitig einleiten zu können.

Die Steuerung eines jeweiligen in der Wasserverteilstation angeordneten Wasserverteilmoduls, z.B. hinsichtlich Wasserfluß und/oder Nährstoffdosierung kann erfolgen durch eine Steuerung in einem jedem Wasserverteilmodul selbst. In einem solchen Fall kann jedes Modul steuerungsautark sein und somit bevorzugt eine kommunikationsfähige Einheit bilden.

Die Steuerung aller Wasserverteilmodule kann auch von einer übergeordneten Einheit erfolgt, die z.B. am Ort der Wasserverteilstation angeordnet, insbesondere in diese integriert ist. eine solche Einheit kann z.B. eine Dockingstation bilden, an welcher die Wasserverteilmodule angeschlossen werden können. In diesem Fall kann es reichen, nur diese Einheit kommunikationsfähig auszubilden, insbesondere hinsichtlich externer Kommunikation mit einem Kommunikationsgerät eines Nutzers, wie einem Smartphone.

Ein Ausführungsbeispiel wird anhand der nachfolgenden Figuren erläutert.

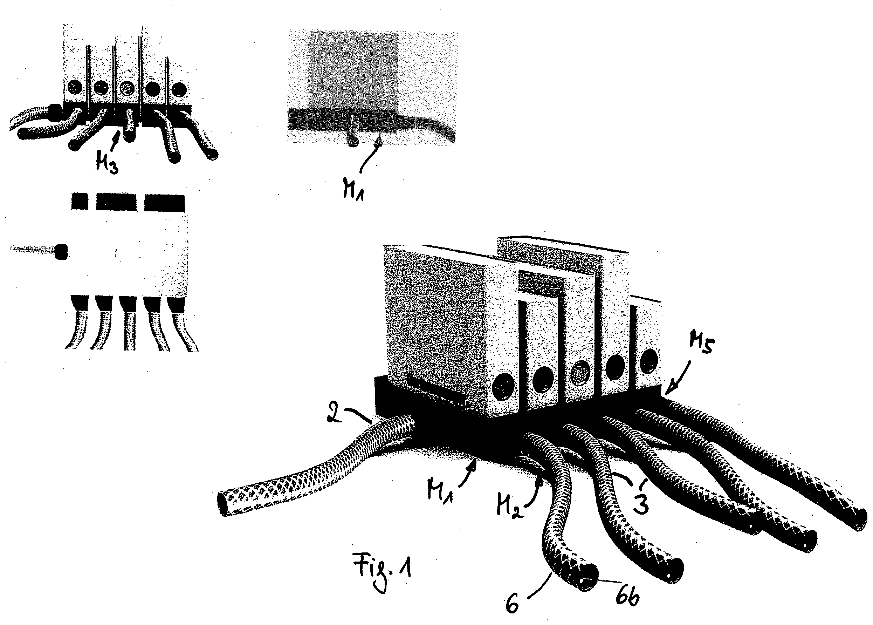

Die Figur 1 zeigt eine Übersicht einer erfindungsgemäßen Wasserverteilstation 1. In diesem Fall ist die Wasserverteilstation 1 aus insgesamt 5 Wasserverteilmodulen M1,...M5 aufgebaut. Eine erfindungsgemäße Wasserverteilstation 1 umfasst wenigstens ein Wasserverteilmodul und kann in der Anzahl beliebig erweitert werden.

Erkennbar ist das linksseitig an dem Wasserverteilmodul M1 ein Wassereingang 2 angeordnet ist, der alle Module M1 bis M5 mit Wasser versorgt. Jedes Modul hat seinen eigenen gesteuerten oder geregelten Schlauchanschluß 3. Erfindungsgemäß kann hier der Nutzer entscheiden, wieviele Schlauchanschlüsse er zur Bewässerung benötigt und demnach auch wieviele Wasserverteilmodule er kombiniert.

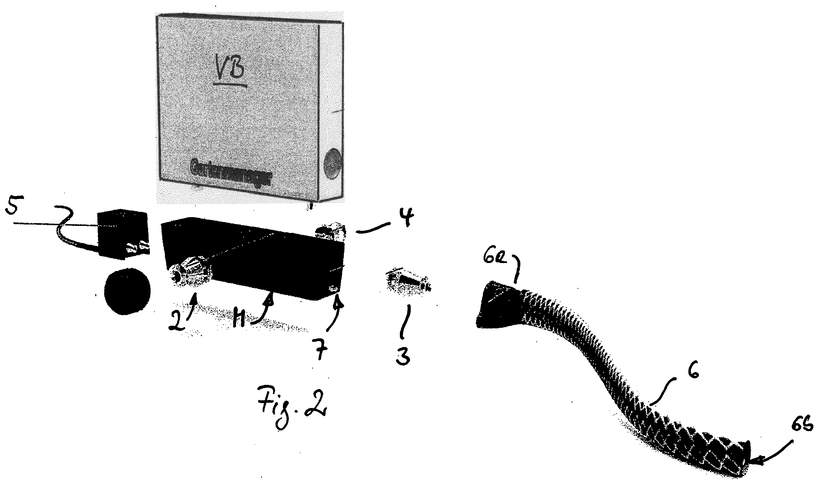

Der Aufbau eines jeden dieser Wasserverteilmodule M1 bis M5 ist in der Figur 2 näher dargestellt.

Hier ist erkennbar, dass ein jedes Modul M einen Wassereingang 2, Schlauchanschluß 3 und Wasserausgang 4 aufweist. Benachbarte Module M werden wasserseitig verbunden, indem ein Wasserausgang 4 eine Moduls an den Wassereingang 2 eines nachfolgenden Moduls angeschlossen wird. Bevorzugt liegen Wassereingang 2 und Wasserausgang 4 mit allgemeiner Gültigkeit bei allen Ausführungen einander fluchtend gegenüber, insbesondere auf gegenüberliegenden, insbesondere den großen Seitenwänden des Moduls. Der Schlauchanschluß 3 ist hier unter einem Winkel von 90 Grad zur Verbindungsrichtung zwischen Wassereingang und Wasserausgang orientiert, insbesondere an einer kleinen Seitenwand eines Modul.

Dem Schlauchanschluß 3 gegenüberliegend kann an ein Modul M, insbesondere ebenso an einer kleinen Seitenwand ein Kommunikationsmodul 5 angeschlossen werden. Netzteil und Kommunikationsmodul 5 können gemeinsam in einer Einheit angeordnet sein.

Das Wasserverteilmodul hat an seiner oberen Seitenwand eine Schnittstelle ausgebildet, an welcher ein Versorgungsbehälter VB angeschlossen werden kann, der z.B. Nährstoffe oder auch sonstige Zusatzstoffe, insbesondere in flüssiger Form aufnehmen kann. Diese Stoffe können durch das Wasserverteilmodul in den Schlauchanschluß 3 zudosiert werden. Dafür weist entweder der Versorgungsbehälter VB oder das Modul M eine Dosiereinheit, insbesondere ein ansteuerbares Ventil auf.

Der Schlauch 6, der mit einer Schlauchkupplung 6a am Schlauchanschluß 3 des Wasserverteilmoduls befestigbar ist umfasst ein Kabel 6b, das entlang der Längserstreckung des Schlauches 6 verläuft, z.B. auf dessen Innenseite oder auch Außen. Der wenigstens eine Leiter des Kabels 6b, dessen Mantel durch den Kunststoff des Schlauches gebildet sein kann, ist mittels der Schlauchkupplung 6a am Schlauchanschluß 3 mit dem Modul M elektrisch verbunden. Dafür ist in der Kupplung 6a der elektrische Anschluß in radialer Richtung nach außen versetzt und mit wenigstens einem entsprechend positionierten Kontakt 7 am Modul M verbindbar.

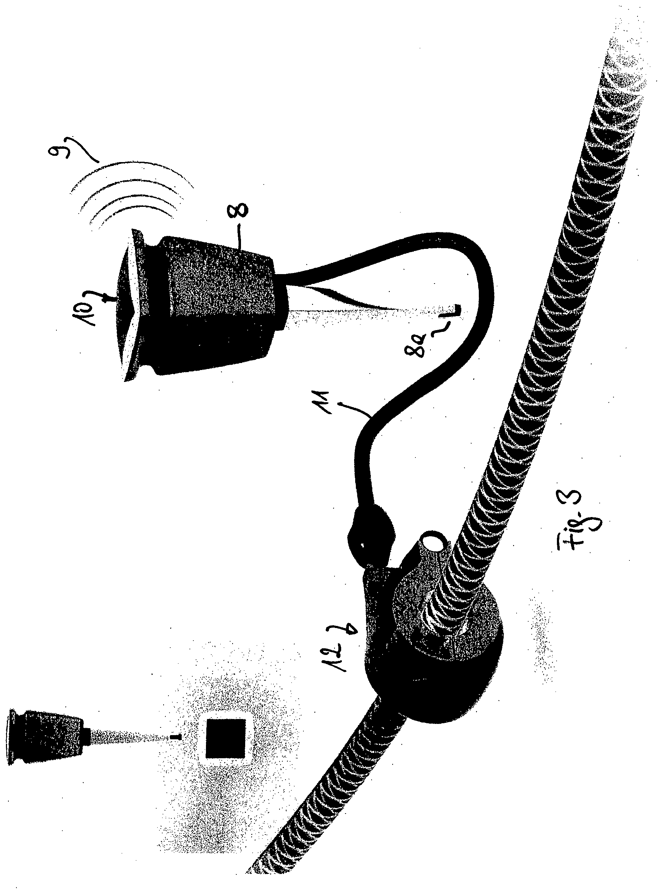

Örtlich entfernt vom Wasserverteilmodul kann in den Boden an einer mit Wasser zu versorgenden Stelle Sensorelement 8 eingesteckt werden, wie es Figur 3 visualisiert. Dieses weist, z.B. am unteren Ende 8a des Steckelementes 8 einen Sensor auf für Bodenwerte, z.B. Feuchte und/oder Nährstoffe. Es ist gemäß der Erfindung vorgesehen solche Meßwerte an das Modul M oder eine übergeordnete Steuerung zu kommunizieren, wofür in diesem Beispiel das Sensorelement 8 mit Funk kommuniziert, angedeutet durch die Funkwellen 9. Die Stromversorgung erfolgt durch eine Solarzelle 10 und internen Akku.

In diesem Beispiel ist das Sensorelement 8 mittels einer Schlauchverbindung 11 mit dem Schlauch 6 verbunden, der vom Modul M kommt. Das vom Sensorelement 8 abgewandte Ende der Schlauchverbindung 11 weist einen Verbinder 12 auf, der in diesem Beispiel um den Schlauch 3 herumgeklappt wird und diesen dabei perforiert und die Perforationsstelle abdichtet. Wasser aus dem Schlauch 3 kann somit direkt in das Sensorelement 8 eingespeist werden und z.B. an der Spitze des Steckelementes austreten.

Sofern keine Solar-Versorgung möglich ist besteht kann mittels des Kabels 6b im Schlauch eine Stromversorgung des Sensorelementes 8 realisiert werden. Auch kann die Übertragung der Daten des Sensorelementes darüber erfolgen.

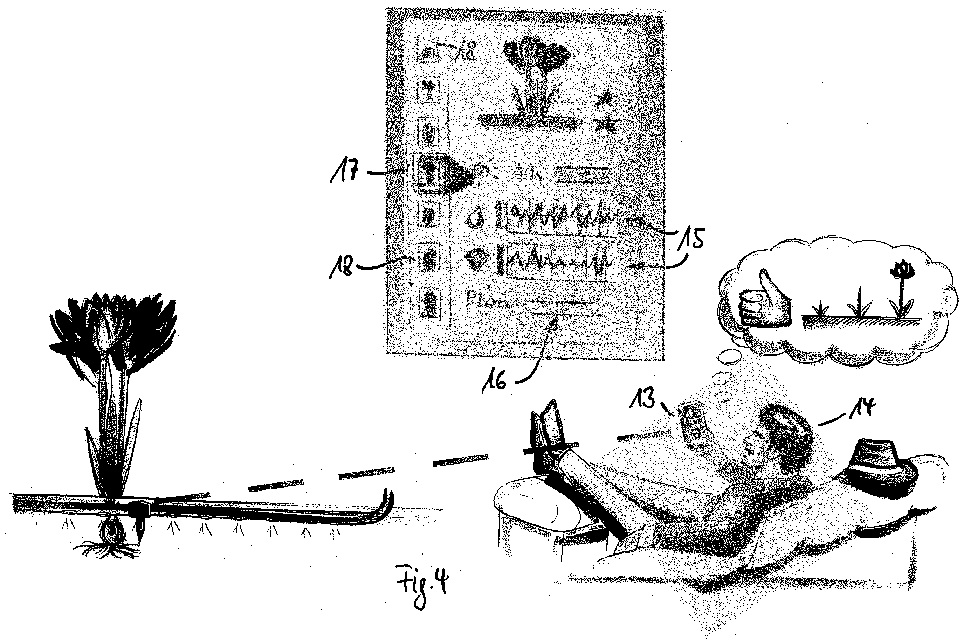

Figur 4 zeigt eine Visualisierung der Betriebsweise. Jedes Wasserversorgungsmodul, kann die Daten eines zugeordneten Sensorelementes 8 entweder mit seinem eigenen Kommunikationsmodul 5, oder mittels eines für alle Module M gemeinsamen Kommunikationsmoduls an ein Smartphone 13 eines Nutzers 14 senden. Der Nutzer kann damit echte Istwerte der Bewässerung und ggfs. auch der Nährstoffe anhand von gegen die Zeit aufgetragenen Messwerten in Graphen 15 am Smartphone 14 ablesen.

Durch das Hinzuladen von Wetterdaten kann auch ein Plan 16 für die Zukunft erstellt und visualisiert werden.

Wesentlich ist hier, dass die jeweiligen Daten für jedes Wasserverteilmodul M gebildet werden können, welches über das Smartphone 13 zur Anzeige auswählbar ist, z.B. hier über die linksseitigen Piktogramme 18 und den Reiter 17. Jedes Piktogramm 18 kann einem Modul M zugeordnet sein.

## Patentansprüche

1. Wasserverteilstation (1) mit einen Wassereingang (2) und wenigstens einem Schlauchanschluß (3), wobei an einen jeweiligen Schlauchanschluß (3) ein Schlauch anschließbar ist zur Leitung von Wasser aus der Wasserverteilstation zu wenigstens einer Wasserbedarfsstelle, wobei die Wasserverteilstation (1) modular aus einer Mehrzahl von Wasserverteilmodulen (M1,...,M5) zusammengesetzt ist, wobei ein jeweiliges Wasserverteilmodul (M1,...,M5) zumindest einen Wassereingang (2) und den Schlauchanschluss (3) aufweist, welcher mit einem steuerbaren Ventil zur Verbindung mit einem am Schlauchanschluss (3) angeschlossenen Schlauch versehen ist, wobei an jedes Wasserverteilmodul (M1,...,M5) ein Versorgungsbehälter (VB) anschließbar ist zur Aufnahme von Nährstoffen, die aus dem Versorgungsbehälter (VB) zum Schlauchanschluß (3) des jeweiligen Wasserverteilmoduls (M1,...,M5) dosierbar sind, **dadurch gekennzeichnet, dass** jedem Wasserverteilmodul (M1,...,M5) wenigstens ein in Erdreich einsteckbares Sensorelement (8) zugeordnet ist, mittels dem am Ort einer Wasserbedarfsstelle Bodenwerte messbar sind, wobei von dem Sensorelement (8) erfasste Meßwerte mittels einer Kommunikationsverbindung an ein Kommunikationsgerät (13) und/oder an ein Wasserverteilmodul (M1,...,M5) oder an ein Kommunikationsmodul (5) zur Funkkommunikation mit einem Kommunikationsgerät (13) übermittelbar sind, wobei das Kommunikationsgerät oder die Wasserverteilstation (1) oder das Wasserverteilmodul (M1,...,M5) eingerichtet ist, eine Steuerung des zugeordneten Wasserverteilmoduls in Abhängigkeit der Meßwerte des Sensorelementes (8) vorzunehmen, wobei ein an einem Wasserverteilmodul (M1,...,M5) angeschlossener Schlauch (6) ein entlang der Schlaucherstreckung verlaufendes Kabel (6b) mit wenigstens einem Leiter aufweist und das Kabel (6b) des Schlauches (6) an das Wasserverteilmodul (M1,...,M5) elektrisch kontaktierbar ist, wobei mittels des Kabels (6b)
a. eine Stromversorgung eines Sensorelementes (8) eingerichtet oder zumindest einrichtbar ist und/oder
b. eine kabelgebundene Kommunikationsstrecke zwischen Wasserverteilmodul (M1,...,M5) und Sensorelement (8) zur Übermittlung von Messwerten eingerichtet oder zumindest einrichtbar ist.

2. Wasserverteilstation nach Anspruch 1, **dadurch gekennzeichnet, dass** ein Wasserverteilmodul (M1,...,M5) einen Wasserausgang (4) zur Verbindung mit dem Wassereingang (2) eines weiteren Wasserverteilmoduls (M1,...,M5) aufweist.

3. Wasserverteilstation nach einem der vorherigen Ansprüche, **dadurch gekennzeichnet, dass** sie eine Vielzahl von Versorgungsbehältern (VB) mit vorgemischten, insbesondere pflanzenspezifischen Nährstoffmixturen umfasst, insbesondere wobei ein jeder Versorgungsbehälter hinsichtlich seiner Nährstoffmixtur oder des Pflanzentypus, für welchen die Nährstoffmixtur vorgesehen ist, markiert ist, insbesondere wobei jeder Versorgungsbehälter (VB) der genannten Vielzahl mittels einer einheitlichen Schnittstelle an ein beliebiges Wasserverteilmodul (M1,...,M5) anschließbar ist.

4. Wasserverteilstation nach einem der vorherigen Ansprüche, **dadurch gekennzeichnet, dass** sie wenigstens ein Kommunikationsmodul (5) aufweist zur Funkkommunikation mit einem Kommunikationsgerät (13), wobei wenigstens eine der folgenden Anordnungen vorgesehen ist:
a. ein gemeinsames Kommunikationsmodul (5) an der Wasserverteilstation (1), insbesondere in dessen Netzteil, für alle Wasserverteilmodule (M1,...,M5) oder
b. jeweils ein Kommunikationsmodul (5) pro Wasserverteilmodul (M1,...,M5), insbesondere das an einen Steckplatz eines Wasserverteilmoduls (M1,...,M5) ansteckbar ist, bevorzugt das in ein Netzteil des Wasserverteilmoduls (M1,...,M5) integriert ist.

5. Wasserverteilstation nach einem der vorherigen Ansprüche , **dadurch gekennzeichnet, dass** sie eingerichtet ist wenigstens eine der folgenden Aktionen vorzunehmen:
a. eine Steuerung des Ventils eines jeden Wasserverteilmoduls (M1,...,M5) in Abhängigkeit von die Bodenfeuchte repräsentierenden Messwerten des Sensorelementes
b. eine Steuerung des Ventils eines jeden Wasserverteilmoduls (M1,...,M5) in Abhängigkeit von Wettervorhersagedaten, insbesondere die durch Kommunikation aus einer Wetterstation und/oder Wetterdatenbank eingelesen sind
c. eine Steuerung eines Dosierventils im Wasserverteilmodul (M1,...,M5) oder im Versorgungsbehälter (VB) in Abhängigkeit von den Nährstoffgehalt repräsentierenden Messwerten des Sensorelementes (8).

6. Wasserverteilstation nach einem der vorherigen Ansprüche , **dadurch gekennzeichnet, dass** ein Sensorelement (8) mittels einer Schlauchverbindung (11) an den an einem Wasserverteilmodul (M1,...,M5) abgehenden Schlauch (6) anschließbar ist, insbesondere hierüber Wasser zu einer Austrittsöffnung im Steckelement des Sensorelementes (8) leitbar ist, mit dem es in den Boden einsteckbar ist.

7. Wasserverteilstation nach einem der vorherigen Ansprüche, **dadurch gekennzeichnet, dass** sie eingerichtet ist anhand von Messwerten eines jeweiligen Sensorelementes (8) und / oder Wetterdaten
a. textliche und/oder bildliche Informationen über aktuelle Bodenzustände am Ort eines Sensorelementes (8) und/oder
b. textliche und/oder bildliche Informationen über zukünftige, mittels eines Wasserversorgungsmoduls (M1,...,M5) durchzuführende Versorgungsaktionen
zu bilden und an ein Kommunikationsgerät (13), insbesondere zum Zweck der dortigen Visualisierung zu übermitteln.

## Claims

1. Water distribution station (1) having a water inlet (2) and at least one pipe connection (3), wherein a pipe can be connected to a respective pipe connection (3) in order to conduct water from the water distribution station to at least one place where water is required, wherein the water distribution station (1) is composed in a modular manner of a plurality of water distribution modules (M1,...,M5), wherein a respective water distribution module (M1,...,M5) has at least one water inlet (2) and the pipe connection (3) which is provided with a controllable valve for connection to a pipe connected to the pipe connection (3), wherein a supply container (VB) can be connected to each water distribution module (M1,...,M5) for the purpose of receiving nutrients which can be metered from the supply container (VB) to the pipe connection (3) of the respective water distribution module (M1,...,M5), **characterized in that** at least one sensor element (8) which can be inserted into the ground is assigned to each water distribution module (M1,...,M5) and can be used to measure soil values at the location of a place where water is required, wherein measured values captured by the sensor element (8) can be transmitted, by means of a communication connection, to a communication device (13) and/or to a water distribution module (M1,...,M5) or to a communication module (5) for radio communication with a communication device (13), wherein the communication device or the water distribution station (1) or the water distribution module (M1,...,M5) is configured to control the assigned water distribution module on the basis of the measured values from the sensor element (8), wherein a pipe (6) connected to a water distribution module (M1,...,M5) has a cable (6b) which runs along the extent of the pipe and has at least one conductor, and the cable (6b) of the pipe (6) can be electrically contact-connected to the water distribution module (M1,...,M5), wherein the cable (6b)
a. is used or at least can be used to set up a power supply to a sensor element (8) and/or
b. is used or at least can be used to set up a wired communication path between the water distribution module (M1,...,M5) and the sensor element (8) for the purpose of transmitting measured values.

2. Water distribution station according to Claim 1, **characterized in that** a water distribution module (M1,...,M5) has a water outlet (4) for connection to the water inlet (2) of a further water distribution module (M1,...,M5).

3. Water distribution station according to one of the preceding claims, **characterized in that** it comprises a multiplicity of supply containers (VB) containing premixed, in particular plant-specific, nutrient mixtures, in particular wherein each supply container is marked with respect to its nutrient mixture or the type of plant for which the nutrient mixture is provided, in particular wherein each supply container (VB) of said multiplicity can be connected to any desired water distribution module (M1,...,M5) by means of a standard interface.

4. Water distribution station according to one of the preceding claims, **characterized in that** it has at least one communication module (5) for radio communication with a communication device (13), wherein at least one of the following arrangements is provided:
a. a common communication module (5) on the water distribution station (1), in particular in the power supply unit thereof, for all water distribution modules (M1,...,M5) or
b. one communication module (5) for each water distribution module (M1,...,M5), which can be plugged into a slot of a water distribution module (M1,...,M5), in particular, and is preferably integrated in a power supply unit of the water distribution module (M1,...,M5).

5. Water distribution station according to one of the preceding claims, **characterized in that** it is configured to carry out at least one of the following actions:
a. control the valve of each water distribution module (M1,...,M5) on the basis of measured values from the sensor element which represent the soil moisture
b. control the valve of each water distribution module (M1,...,M5) on the basis of weather forecast data which are read in, in particular, from a weather station and/or a weather database by means of communication
c. control a metering valve in the water distribution module (M1,...,M5) or in the supply container (VB) on the basis of measured values from the sensor element (8) which represent the nutrient content.

6. Water distribution station according to one of the preceding claims, **characterized in that** a sensor element (8) can be connected to the outgoing pipe (6) on a water distribution module (M1,...,M5) by means of a pipe link (11), in particular water can be conducted thereby to an outlet opening in the plug-in element of the sensor element (8), with which it can be inserted into the soil.

7. Water distribution station according to one of the preceding claims, **characterized in that** it is configured to form
a. text and/or graphical information relating to current soil conditions at the location of a sensor element (8) and/or
b. text and/or graphical information relating to future supply actions to be carried out by means of a water supply module (M1,...,M5)
on the basis of measured values from a respective sensor element (8) and/or weather data and to transmit said information to a communication device (13), in particular for the purpose of visualization there.

## Revendications

1. Station de distribution d'eau (1) comprenant une entrée d'eau (2) et au moins un raccord de tuyau (3), un tuyau pouvant être raccordé à un raccord de tuyau (3) respectif pour conduire de l'eau depuis la station de distribution d'eau vers au moins un point de consommation d'eau, la station de distribution d'eau (1) étant de constitution modulaire à partir d'une pluralité de modules de distribution d'eau (M1, ..., M5), un module de distribution d'eau (M1, ..., M5) respectif possédant au moins une entrée d'eau (2) et le raccord de tuyau (3), lesquels sont pourvus d'une vanne commandable servant à la liaison avec un tuyau raccordé au raccord de tuyau (3), un réservoir d'alimentation (VB) pouvant être raccordé à chaque module de distribution d'eau (M1, ..., M5) pour recevoir des substances nutritives, lesquelles peuvent être dosées depuis le réservoir d'alimentation (VB) vers le raccord de tuyau (3) du module de distribution d'eau (M1, ..., M5) respectif, **caractérisée en ce qu'**à chaque module de distribution d'eau (M1, ..., M5) est associé au moins un élément capteur (8) pouvant être enfiché en terre, au moyen duquel peuvent être mesurées des valeurs du sol à l'endroit de la consommation d'eau, les valeurs mesurées acquises par l'élément capteur (8) pouvant être communiquées au moyen d'une liaison de communication à un appareil de communication (13) et/ou à un module de distribution d'eau (M1, ..., M5) ou à un module de communication (5) en vue d'une radiocommunication avec un appareil de communication (13), l'appareil de communication ou la station de distribution d'eau (1) ou le module de distribution d'eau (M1, ..., M5) étant conçu pour effectuer une commande du module de distribution d'eau associé en fonction des valeurs mesurées de l'élément capteur (8), un tuyau (6) raccordé à un module de distribution d'eau (M1, ..., M5) possédant un câble (6b) pourvu d'au moins un conducteur qui suit un tracé le long de l'extension du tuyau et le câble (6b) du tuyau (6) pouvant être mis en contact électrique au niveau du module de distribution d'eau (M1, ..., M5),
a. une alimentation électrique d'un élément capteur (8) étant établie ou au moins pouvant être établie et/ou
b. un trajet de communication filaire entre le module de distribution d'eau (M1, ..., M5) et l'élément capteur (8) destiné à communique des valeurs mesurées étant établi ou au moins pouvant être établi
au moyen du câble (6b).

2. Station de distribution d'eau selon la revendication 1, **caractérisée en ce qu'**un module de distribution d'eau (M1, ..., M5) possède une sortie d'eau (4) servant à la liaison avec l'entrée d'eau (2) d'un autre module de distribution d'eau (M1, ..., M5).

3. Station de distribution d'eau selon l'une des revendications précédentes, **caractérisée en ce qu'**elle comporte une pluralité de réservoirs d'alimentation (VB) avec des mélanges de substances nutritives prémélangés, notamment spécifiques aux plantes, chaque réservoir d'alimentation étant notamment marqué pour ce qui concerne son mélange de substances nutritives ou le type de plante auquel est destinée son mélange de substances nutritives, chaque réservoir d'alimentation (VB) de ladite pluralité pouvant notamment être raccordé à un module de distribution d'eau (M1, ..., M5) quelconque au moyen d'une interface uniforme.

4. Station de distribution d'eau selon l'une des revendications précédentes, **caractérisée en ce qu'**elle possède au moins un module de communication (5) destiné à la radiocommunication avec un appareil de communication (13), au moins l'un des arrangements suivants étant présent :
a. un module de communication (5) commun au niveau de la station de distribution d'eau (1), notamment dans son bloc d'alimentation électrique, pour tous les modules de distribution d'eau (M1, ..., M5) ou
b. respectivement un module de communication (5) par module de distribution d'eau (M1, ..., M5), qui peut notamment être enfiché au niveau d'un port d'enfichage d'un module de distribution d'eau (M1, ..., M5), et qui est de préférence intégré dans un bloc d'alimentation électrique du module de distribution d'eau (M1, ..., M5).

5. Station de distribution d'eau selon l'une des revendications précédentes, **caractérisée en ce qu'**elle est conçue pour accomplir au moins l'une des actions suivantes :
a. une commande de la vanne de chaque module de distribution d'eau (M1, ..., M5) en fonction de valeurs mesurées de l'élément capteur qui représentent l'humidité du sol
b. une commande de la vanne de chaque module de distribution d'eau (M1, ..., M5) en fonction de données de prévisions météorologiques, qui sont notamment chargées par communication depuis une station météorologique et/ou une base de données météorologiques
c. une commande d'une vanne doseuse dans le module de distribution d'eau (M1, ..., M5) ou dans le réservoir d'alimentation (VB) en fonction de valeurs mesurées de l'élément capteur (8) qui représentent la teneur en substance nutritive.

6. Station de distribution d'eau selon l'une des revendications précédentes, **caractérisée en ce qu'**un élément capteur (8) peut être raccordé au moyen d'une liaison de tuyau (11) au tuyau (6) qui part d'un module de distribution d'eau (M1, ..., M5), de l'eau pouvant notamment être acheminée par le biais de celle-ci à une ouverture de sortie dans l'élément d'enfichage de l'élément capteur (8).

7. Station de distribution d'eau selon l'une des revendications précédentes, **caractérisée en ce qu'**elle est conçue pour, à l'aide de valeurs mesurées d'un élément capteur (8) respectif et/ou de données météorologiques, former
a. des informations textuelles et/ou visuelles à propos des états actuels du sol sur le lieu d'un élément capteur (8) et/ou
b. des informations textuelles et/ou visuelles à propos des futures actions d'alimentation à accomplir au moyen d'un module de distribution d'eau (M1, ..., M5) et les communiquer à un appareil de communication (13), notamment à des fins de visualisation à l'endroit où il se trouve.
